# EUROPEAN PATENT SPECIFICATION

(11) **EP 1 137 148 B1**
(45) Date of publication and mention of the grant of the patent: **06.03.2013**
(21) Application number: 01106963.0
(22) Date of filing: 20.03.2001
(51) Int. Cl.: H02J 3/14, G07F 15/00, H02J 9/08

(54) **System for the production and controlled distribution of electric energy in isolated areas**
System zur Erzeugung und gesteuerten Verteilung elektrischer Energie
Système pour la production et distribution commandée d'énergie électrique

(30) Priority: 21.03.2000 IT BO000152
(43) Date of publication of application: 26.09.2001
(73) Proprietor: ENERGIFERA S.r.l., IMOLA (BO) (IT); Zanarini, Sergio, 40020 Casalfiumanese (IT)
(72) Inventor: Zanarini, Sergio, 40020 Casalfiumanese (IT)
(74) Representative: Bongiovanni, Simone

(56) References cited:
- WO-A1-95/20836
- DE-A- 3 115 795
- DE-A1- 4 232 516
- DE-U1- 20 002 237
- FR-A- 2 753 016
- US-A- 5 696 695

## Description

The present invention relates to a system for the production and controlled distribution of electric energy in isolated areas.

As is known, in recent years, a considerable increase has been recorded in the demand for small- and medium-power generator sets for supplying - in parallel with discontinuous electric energy sources, such as solar panels or wind generators - rural areas that cannot be serviced by conventional electricity mains. It is far more economical, in fact, to produce electric energy locally using conventional fuel than to construct long power lines connecting major power plants to isolated communities.

Currently used generator sets comprise a synchronous electric generator; an internal combustion drive unit (normally a diesel engine) for driving the electric generator; and a control unit for starting and so controlling the drive unit as to operate the electric generator at a constant predetermined rotation speed depending on the frequency of the electricity mains replaced. The rotary electric generator is normally installed in parallel with discontinuous electric energy sources, so as to supply users, as required, with electric energy in conjunction with or in lieu of the discontinuous electric energy sources.

Given the high cost of generator sets and the fact that they are normally used in developing countries with limited funds, increased demand has also led to the setting up of numerous companies, which purchase and install generator sets - possibly together with other discontinuous electric energy sources - close to and for marketing electric energy to populated areas not serviced by conventional electricity mains.

French patent application nr. FR 2753016 discloses a protection and electrical power management system with pre-payment, comprising a common four-pole circuit breaker supplied by a neutral conductor and three phase secondary conductors coming from a single phase primary conductor or from three phase conductors of a three-phase power system. The system supplies separately three groups of users respectively connected to one of the phase secondary conductors. An electrical power management circuit orders opening of the common circuit breaker in the event of an overload in one of the phase secondary conductors and when the electricity credit is nil.

German paten application nr. DE 4232516 A1 discloses a system for the production of electric energy comprising a plurality of uninterruptable power supplies (UPS) with their output connected in parallel to the electric load (island electric network), a photovoltaic plant connected to the load through inverters, a wind converter plant connected to the load through transformers, a storage battery with self-commutating inverters connected to the load through a transformer, and a diesel-powered emergency generator. The photovoltaic and wind converter plants supply the load and the battery charging. If there is insufficient solar or wind energy, the battery then provides a boost to the load. In extreme circumstances, the emergency generator is switched-on to supply power and charging the battery through line-commutating rectifiers.

Document WO 9520836 discloses another system for production and distribution of elastic energy insolated areas with rotary synchronous generator.

Known generator sets, however, are unsuitable for this purpose by failing to control, instant by instant, how much electric energy is and/or has been supplied to each user, who is therefore billed periodically by the company for a lump sum which often bears no relation to actual consumption. In many cases, in fact, the user may be billed so disproportionately as to revert to alternative makeshift solutions.

Known generator sets also have the major drawback of not being integratable with other electric energy sources to optimize production and distribution of the electric energy available.

It is an object of the present invention to provide a system for the production and controlled distribution of electric energy in isolated areas, designed to eliminate the drawbacks of conventional generator sets, and which, at the same time, is flexible, reliable and cheap to run.

The present invention a system for the production and controlled relates to distribution of electric energy in isolated areas according to claim 1.
Figure 1 shows schematically a system for the production and controlled distribution of electric energy in isolated areas, in accordance with the teachings of the present invention;
Figures 2 and 3 show two schematic details of the Figure 1 system.

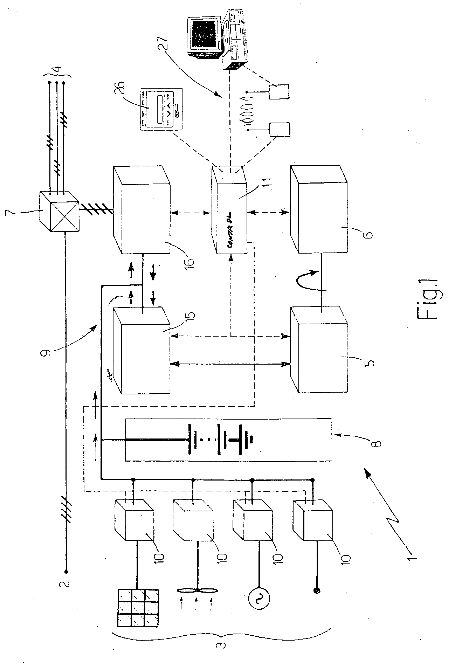

Number 1 in Figure 1 indicates as a whole a system for the production and controlled distribution of electric energy, and which is especially suitable for use in rural or isolated areas possibly also equipped with discontinuous electric energy sources, such as solar panels, wind generators, small hydraulic turbines, or even an electricity mains unable to ensure continuous electric energy supply.

In the following description, the electricity mains supplying electric energy discontinuously with a mains frequency f is indicated 2, and the other discontinuous electric energy sources, i.e. alternative electric energy sources such as solar panels, wind generators, small hydraulic turbines, etc., are indicated as a whole by 3.

With reference to Figure 1, system 1 is interposed between the discontinuous electric energy sources - i.e. electricity mains 2, if any, and alternative electric energy sources 3 - and one or more electric energy users 4. In the example shown, reference is made to three electric energy users 4.

System 1 comprises a known rotary electric generator 5 for producing electric energy with a mains frequency varying according to the rotation speed of the generator; an internal combustion engine 6 for rotating the shaft of electric generator 5 at a speed variable in any manner to produce electric energy; and an energy switching node 7 to which electricity mains 2, if any, and the three electric energy users 4 are connected directly.

System 1 also comprises an electric energy storage battery 8; a two-way electric energy static conversion unit 9 connecting electric energy storage battery 8 to electric generator 5 and energy switching node 7; and one or more one-way electric energy static conversion units 10 connecting electric energy source/s 3 to electric energy storage battery 8.

Static conversion unit 9 controls electric energy supply to and from electric generator 5 and energy switching node 7; and static conversion unit/s 10 control electric energy supply from electric energy source/s 3 to electric energy storage battery 8.

System 1 also comprises a control unit 11 for controlling static conversion unit 9, static conversion unit/s 10, internal combustion engine 6 and energy switching node 7 according to a predetermined logic and as a function of various detected operating parameters, so as make the best use of available resources and maximize the overall efficiency of system 1.

In the example shown, electricity mains 2 is a three-phase type with a mains frequency f; the three electric energy users 4 draw three-phase electric energy; electric generator 5 is a three-phase asynchronous motor-generator; and internal combustion engine 6 is a diesel engine. Electric generator 5 may, obviously, also be defined by a known synchronous generator.

Electric energy storage battery 8 is capable of storing electric energy in another form (e.g. kinetic or chemical energy) and is defined, in the example shown, by a series of known rechargeable lead-acid batteries.

Under the control of control unit 11, energy switching node 7 controls the electric connections between electricity mains 2 and static conversion unit 9 to allow each electric energy user 4 to draw electric energy with mains frequency f, regardless of the presence or not of electric energy in electricity mains 2. Again under the control of control unit 11, energy switching node 7 also monitors electric energy supply to each electric energy user 4, and, on command, cuts off the electric connection between electric energy user 4 and the currently operating electric energy source, be it electricity mains 2 or static conversion unit 9.

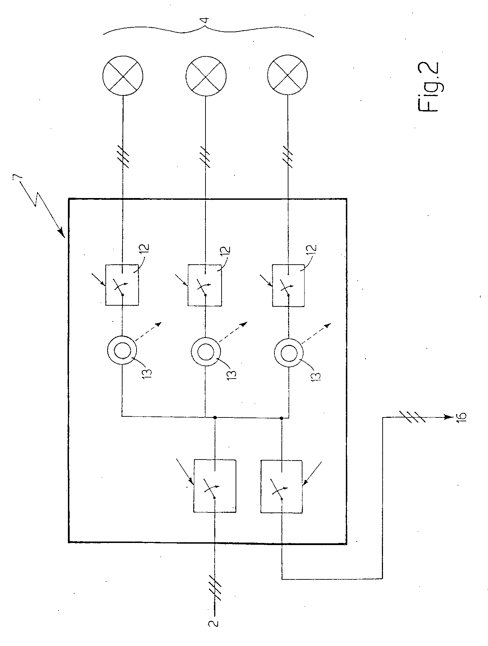

With reference to Figure 2, energy switching node 7 comprises, for each electric energy user 4, a controlled electric switch 12 for selectively connecting electric energy user 4 electrically to electricity mains 2 and static conversion unit 9; and an electric power measuring device 13 located in series with controlled electric switch 12, and which provides for determining, instant by instant, the amount of electric energy drawn per unit of time by electric energy user 4, and for communicating the findings to control unit 11.

Preferably, though not necessarily, energy switching node 7 has known directional safeguards for selectively isolating electricity mains 2 from static conversion unit 9 when electricity mains 2 is unable to supply electric energy and electric energy users 4 are supplied with electric energy by static conversion unit 9.

With reference to Figure 1, static conversion unit 9 comprises two known impressed-voltage conversion bridges, a first of which, indicated 15, connects electric energy storage battery 8 to electric generator 5 and permits electric energy supply to and from electric generator 5, and a second of which, indicated 16, connects electric energy storage battery 8 to energy switching node 7 and permits electric energy supply to and from energy switching node 7. Conversion bridges 15 and 16, which are three-phase in the example shown, are controlled by control unit 11 and preferably, though not necessarily, operate in PWM (Pulse Width Modulation) mode.

More specifically, conversion bridge 15 is capable of both converting electric energy with any mains frequency into direct electric energy to permit electric energy supply from electric generator 5 to electric energy storage battery 8, and converting direct electric energy into electric energy with any mains frequency to permit electric energy supply from electric energy storage battery 8 to electric generator 5. In the first case, electric generator 5 performs its main function, which is that of producing electric energy for supply to electric energy storage battery 8; and, in the second case, electric generator 5 is used as a starting motor to start internal combustion engine 6, which, as is known, has zero starting torque.

Similarly, conversion bridge 16 is capable of both converting direct electric energy into electric energy with mains frequency f to permit electric energy supply from electric energy storage battery 8 to energy switching node 7, and converting the electric energy with mains frequency f from electricity mains 2 into direct electric energy to permit electric energy supply from energy switching node 7 to electric energy storage battery 8.

The or each static conversion unit 10 is defined by a conversion bridge capable of converting the electric energy produced by electric energy source 3 - be it direct or alternating with a fixed or variable frequency - into direct electric energy to permit electric energy supply from electric energy source 3 to electric energy storage battery 8. Obviously, the characteristics of the conversion bridge depend on the type of electric energy produced by electric energy source 3.

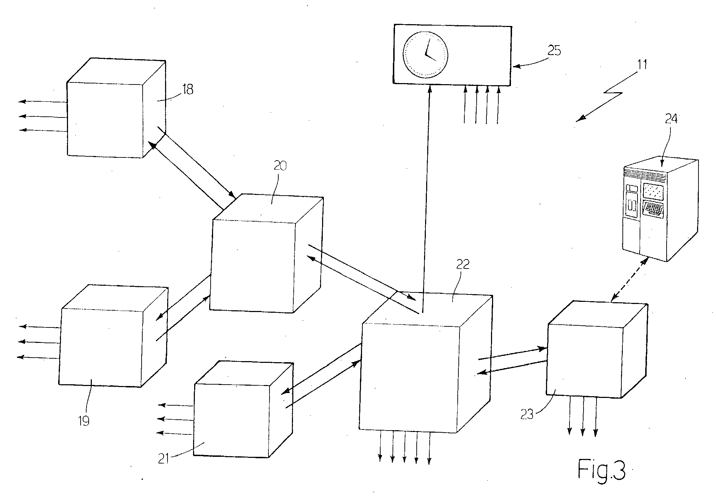

With reference to Figures 1 and 3, control unit 11 comprises an electronic central control unit 18 for real-time controlling conversion bridges 15 and 16; an electronic central control unit 19 for real-time controlling static conversion unit/s 10; an electronic central monitoring unit 20 for monitoring and coordinating the electric energy supplies produced by electronic central control units 18 and 19; an electronic central control unit 21 for controlling internal combustion engine 6; and a main electronic central control unit 22 for overall control of system 1 as a function of signals from a number of sensors (not shown) distributed throughout system 1 and for detecting, for example, the voltages of electricity mains 2, energy switching node 7 and electric energy sources 3, the electric energy to and from energy switching node 7 per unit of time, the rotation speed of internal combustion engine 6, i.e. of electric generator 5, and the amount of electric energy stored in electric energy storage battery 8.

Control unit 11 also comprises an electronic central control unit 23 for controlling energy switching node 7 and electric energy supply to users, and which receives the signals from the various electric power measuring devices 13, meters instant by instant the consumption of each electric energy user 4, and disconnects the user from energy switching node 7 upon consumption exceeding a predetermined prepaid amount, i.e. when the prepaid consumption credit of electric energy user 4 runs out. Electric energy user 4 is obviously disconnected by opening the corresponding controlled electric switch 12.

To simplify consumption control, control unit 11 is also provided with one or more credit terminals 24 located close to system 1 and in the immediate vicinity of electric energy user/s 4 to enable any user connected to system 1 to take out further prepaid consumption credit. In a further embodiment, credit terminal 24 may be defined by a known cellular telephone.

Credit terminals 24 are obviously connected to electronic central control unit 23 to transmit to it in real time the particulars of the electric energy user 4 taking out further prepaid consumption credit and the amount of credit taken out, and comprise collecting means for receiving and verifying paper money, credit cards and similar.

In the example shown, control unit 11 also comprises a known chronological event recorder 25 for sequentially storing, for a given length of time, the signals from the sensors (not shown) and electronic central control units 18, 19, 20, 21, 21, to immediately detect any malfunctions.

Control unit 11 also comprises an operator control panel 26 for directly controlling electronic central control unit 22 and, hence, system 1; and a known communications network 27 by which electronic central control unit 22 communicates with an external control station even a considerable distance from the system. Communications network 27 may also be used to connect the control units 11, and so permit parallel operation, of a number of systems similar to system 1.

Electronic central control unit 22 controls the production and supply of electric energy according to various criteria, including the amount and cost of electric energy available from electricity mains 2, the electric energy available from alternative electric energy sources 3, electric energy demand by electric energy users 4, and the cost of producing electric energy by means of electric generator 5.

More specifically, electronic central control unit 22 controls energy switching node 7 to appropriately connect electricity mains 2, electric energy users 4 and conversion unit 9, and also controls start-up and the speed of internal combustion engine 6 as a function of electric energy production requirements.

More specifically, electronic central control unit 22 may control electric energy supply to supply electric energy users 4 with electric energy from electric generator 5 and/or electric energy storage battery 8, when no electric energy is available from electricity mains 2 (if present) or alternative electric energy sources 3; or may control electric energy supply to supply electric energy users 4 with electric energy from one or more alternative electric energy sources 3 and possibly also from electric energy storage battery 8, when no electric energy is available from electricity mains 2 (if present) and operating electric generator 5 is uneconomical.

Other operating combinations are obviously possible, depending on the electric energy sources available and the energy demand of users 4.

It should be pointed out that, when electric energy storage battery 8 is fully charged, electronic central control unit 22 is capable of controlling and balancing electric energy supply to and from electric energy storage battery 8 to avoid overloading the battery.

When necessary, electronic central control unit 22 can use the electric energy from electricity mains 2 to both supply electric energy users 4 and recharge electric energy storage battery 8.

Operation of system 1 is easily deducible from the above description with no further explanation required.

It should be pointed out, however, that operation of the assembly defined by electric generator 5 and internal combustion engine 6 differs from that of known no-break systems by the speed of internal combustion engine 6, i.e. of electric generator 5, varying as a function of electric energy demand per unit of time, as opposed to being determined as a function of the frequency of the electric energy supplied, i.e. mains frequency f.

System 1 for the production and controlled distribution of electric energy in isolated areas, as described above, has numerous advantages: first and foremost is undoubtedly the flexibility with which the system caters to the energy requirements of each electric energy user 4. Using system 1, the consumption of each electric energy user 4 can be programmed, in terms of when and how much, according to personal finances.

Other major advantages of system 1 are the high degree of overall efficiency by employing at any time the cheapest source of electric energy, be it electricity mains 2, electric generator 5, or any of alternative electric energy sources 3; and the high degree of flexibility in the operation of the system which enables it to adapt in real time to the electric energy requirements of electric energy users 4.

A further advantage of system 1 is the possibility of employing the electric energy from electricity mains 2 (if present), from alternative electric energy sources 3, from electric generator 5 and from electric energy storage battery 8 jointly to meet any peak demand by electric energy users 4.

A major advantage of using an asynchronous motor-generator such as electric generator 5 is that of eliminating the need for a starting motor for internal combustion engine 6.

Clearly, changes may be made to system 1 for the production and controlled distribution of electric energy in isolated areas, as described and illustrated herein, without, however, departing from the scope of the present invention.

## Claims

1. A system for the production and controlled distribution of electric energy in isolated areas, the system (1) comprising:
- a rotary electric generator (5) for producing electric energy,
- an internal combustion engine (6) for powering said electric generator (5);
- an energy switching node (7) to which at least one electric energy user (4) is connectable electrically;
- a electric energy storage battery (8); and
- a first static electric energy conversion unit (9) connecting the electric energy storage battery (8) to the electric generator (5) and to said energy switching node (7) and capable of controlling electric energy supply to and from the electric generator (5) and the energy switching node (7);
said rotary electric generator (5) consisting of an asynchronous motor-generator for being used as a starting motor to start said internal combustion engine (6); said first static electric energy conversion unit (9) is two-way and comprises two conversion bridges (15, 16), a first (15) of which connects the electric energy storage battery (8) to the electric generator (5) and permits electric energy supply to and from the electric generator (5), and a second (16) of which connects the electric energy storage battery (8) to the energy switching node (7) and permits electric energy supply to and from the energy switching node (7); said energy switching node (7) having electric power draw measuring means (13) for determining, instant by instant, the electric power drawn by said electric energy user (4), and electric energy supply cutoff means (12) for cutting off, on command, electric energy supply to said electric energy user (4); the system (1) also comprising:
- electric energy supply control means (23) for controlling electric energy supply to users, and which meter the consumption of said electric energy user (4) instant by instant on the basis of the findings of the electric power draw measuring means (13), and activate the electric energy supply cutoff means (12) to cut off energy supply when the consumption credit of said electric energy user (4) runs out;
- at least one discontinuous electric energy source (3);
- at least one second static electric energy conversion unit (10) connecting said discontinuous electric energy source (3) to said electric energy storage battery (8) and capable of controlling electric energy supply from the discontinuous electric energy source (3) to the electric energy storage battery (8), said second static electric energy conversion unit (10) being one-way and defined by a conversion bridge for converting the electric energy produced by the discontinuous electric energy source (3) into electric energy suitable for the electric energy storage battery (8), so as to permit electric energy supply from said discontinuous electric energy source (3) to said electric energy storage battery (8); and
- a control unit (11) for controlling, according to a predetermined logic, said first static electric energy conversion unit (9), said second static electric energy conversion unit (10), the internal combustion engine (6) and the energy switching node (7) as a function of various detected operating parameters, so as to make the best use of the various resources available and maximize overall efficiency of the system (1).

2. A system as claimed in Claim 1, **characterized by** the fact that said energy switching node (7) is connected to the electricity mains (2).

3. A system as claimed in Claim 1, **characterized by** comprising at least one credit terminal (24) permitting said at least one electric energy user (4) to purchase further consumption credit; said at least one credit terminal (24) being connected to said electric energy supply control means (23).

4. A system as claimed in Claim 1, **characterized in that** said electric energy supply cutoff means (12) comprise at least one controlled electric switch (12) upstream from said electric energy user (4).

5. A system as claimed in Claim 4, **characterized in that** said electric power draw measuring means (13) comprise at least one electric power measuring device (13) in series with said controlled electric switch (12).

6. A system as claimed in Claim 1, **characterized in that** said control unit (11) comprises a communications network (27) by which a main electronic central control unit (22) communicates with an external control station.

## Patentansprüche

1. System für die Herstellung und kontrollierte Verteilung von Elektroenergie in abgelegenen Gegenden, wobei das System (1) umfasst:
- einen elektrischen Drehgenerator (5) zum Erzeugen von Elektroenergie;
- einen Verbrennungsmotor (6) zum Antreiben des elektrischen Generators (5);
- einen Energieschaltknoten (7), an den zumindest ein Elektroenergienutzer (4) elektrisch anschließbar ist;
- eine Elektroenergiespeicherbatterie (8); und
- eine erste statische Elektroenergieumwandlungseinheit (9), die die Elektroenergiespeicherbatterie (8) an den Elektrogenerator (5) und an den Energieschaltknoten (7) anschließt und imstande ist, die Elektroenergiezufuhr zu und von dem Elektrogenerator (5) und dem Energieschaltknoten (7) zu steuern;
wobei der elektrische Drehgenerator (5) aus einem asynchronen Motor-Generator besteht, der als Startmotor zum Starten des Verbrennungsmotors (6) verwendet wird; wobei die erste statische Elektroenergieumwandlungseinheit (9) zweiwegig ist und zwei Wandlerbrücken (15, 16) umfasst, von welchen eine erste (15) die Elektroenergiespeicherbatterie (8) mit dem Elektrogenerator (5) verbindet und eine Elektroenergiezufuhr zu und vom Elektrogenerator (5) ermöglicht, und von welchen eine zweite (16) die Elektroenergiespeicherbatterie (8) mit dem Energieschaltknoten (7) verbindet und eine Elektroenergiezufuhr zu und vom Energieschaltknoten (7) ermöglicht; wobei der Energieschaltknoten (7) Elektroenergieaufnahmemessmittel (13) aufweist, um jederzeit die Elektroenergie zu bestimmen, die vom Elektroenergienutzer (4) aufgenommen wird, sowie ein Elektroenergiezufuhrunterbrechungsmittel (12) zum Unterbrechen, auf Befehl, der Elektroenergiezufuhr zu dem Elektroenergienutzer (4); wobei das System (1) ebenso umfasst:
- Elektroenergiezufuhrsteuerungsmittel (23) zum Steuern der Elektroenergiezufuhr zu Nutzern,
- die jederzeit den Verbrauch des Elektroenergienutzers (4) aufgrund der Ergebnisse des Elektroenergieaufnahmemessmittels (13) messen und das Elektroenergiezufuhrunterbrechungsmittel (12) aktivieren, um die Energiezufuhr zu unterbrechen, wenn das Verbrauchsguthaben des Elektroenergienutzers (4) ausläuft;
- mindestens eine diskontinuierliche Elektroenergiequelle (3);
- mindestens eine zweite statische Elektroenergiewandlereinheit (10), die die diskontinuierliche Elektroenergiequelle (3) an die Elektroenergiespeicherbatterie (8) anschließt und imstande ist, die Elektroenergiezufuhr von der diskontinuierlichen Elektroenergiequelle (3) zur Elektroenergiespeicherbatterie (8) zu steuern, wobei die zweite statische Elektroenergiewandlereinheit (10) einwegig ist und durch eine Wandlerbrücke definiert ist, die Elektroenergie, die von der diskontinuierlichen Elektroenergiequelle (3) erzeugt wird, in Elektroenergie, die für die Elektroenergiespeicherbatterie (8) geeignet ist, umwandelt, so dass eine Elektroenergiezufuhr von der diskontinuierlichen Elektroenergiequelle (3) zur Elektroenergiespeicherbatterie (8) möglich ist; und
- eine Steuereinheit (11) zum Steuern entsprechend einer vorgegebenen Logik der ersten statischen Elektroenergiewandlereinheit (9), der zweiten statischen Elektroenergiewandlereinheit (10), des Verbrennungsmotors (6) und des Energieschaltknotens (7) als Funktion verschiedener erfasster Betriebsparameter, so dass die verschiedenen verfügbaren Ressourcen am besten genutzt werden und die Gesamteffizienz des Systems (1) maximiert wird.

2. System nach Anspruch 1, **gekennzeichnet durch** die Tatsache, dass der Energieschaltknoten (7) an das Stromnetz (2) angeschlossen ist.

3. System nach Anspruch 1, **dadurch gekennzeichnet, dass** es mindestens ein Guthaben-Terminal (24) umfasst, das dem mindestens einen Elektroenergienutzer (4) ermöglicht, ein weiteres Verbrauchsguthaben zu kaufen; wobei das mindestens eine Guthaben-Terminal (24) an das Elektroenergiezufuhrsteuermittel (23) angeschlossen ist.

4. System nach Anspruch 1, **dadurch gekennzeichnet, dass** das Elektroenergiezufuhrunterbrechungsmittel (12) mindestens einen gesteuerten, dem Elektroenergienutzer (4) vorgeschalteten elektrischen Schalter (12) umfasst.

5. System nach Anspruch 4, **dadurch gekennzeichnet, dass** das Elektroenergieaufnahmemessmittel (13) mindestens eine Elektroenergiemessvorrichtung (13) in Serie mit dem gesteuerten elektrischen Schalter (12) umfasst.

6. System nach Anspruch 1, **dadurch gekennzeichnet, dass** die Steuereinheit (11) ein Kommunikationsnetz (27) umfasst, durch das eine elektronische Hauptzentralsteuerungseinheit (22) mit einer externen Steuerstation kommuniziert.

## Revendications

1. Système de production et de distribution commandée d'énergie électrique dans des zones isolées, le système (1) comprenant :
- un générateur électrique rotatif (5) destiné à produire de l'énergie électrique,
- un moteur à combustion interne (6) destiné à entraîner ledit générateur électrique (5) ;
- un noeud de commutation d'énergie (7) auquel au moins un utilisateur d'énergie électrique (4) peut être raccordé électriquement ;
- un accumulateur d'énergie électrique (8) ; et
- une première unité de conversion d'énergie électrique statique (9) raccordant l'accumulateur d'énergie électrique (8) au générateur électrique (5) et audit noeud de commutation d'énergie (7) et apte à commander l'alimentation en énergie électrique en direction et en provenance du générateur électrique (5) et du noeud de commutation d'énergie (7) ;
ledit générateur électrique rotatif (5) se composant d'un moteur-générateur asynchrone destiné à être utilisé comme moteur de démarrage pour démarrer ledit moteur à combustion interne (6) ; ladite première unité de conversion d'énergie électrique statique (9) est à deux voies et comprend deux ponts de conversion (15, 16), dont un premier (15) raccorde l'accumulateur d'énergie électrique (8) au générateur électrique (5) et permet l'alimentation en énergie électrique vers et depuis le générateur électrique (5), et dont un second (16) raccorde l'accumulateur d'énergie électrique (8) au noeud de commutation d'énergie (7) et permet l'alimentation en énergie électrique en direction et en provenance du noeud de commutation d'énergie (7) ; ledit noeud de commutation d'énergie (7) possédant des moyens de mesure de consommation de puissance électrique (13) destinés à déterminer, à chaque instant, la puissance électrique consommée par ledit utilisateur d'énergie électrique (4), et des moyens de coupure d'alimentation en énergie électrique (12) destinés à couper, sur commande, l'alimentation en énergie électrique en direction dudit utilisateur d'énergie électrique (4) ; le système (1) comprenant également :
- des moyens de commande d'alimentation en énergie électrique (23) destinés à commander l'alimentation en énergie électrique en direction des utilisateurs, et lesquels mesurent la consommation par ledit utilisateur d'énergie électrique (4) à chaque instant en se fondant sur les résultats des moyens de mesure de consommation de puissance électrique (13), et activent les moyens de coupure d'alimentation en énergie électrique (12) pour couper l'alimentation en énergie lorsque le crédit de consommation dudit utilisateur d'énergie électrique (4) est épuisé ;
- au moins une source d'énergie électrique discontinue (3) ;
- au moins une seconde unité de conversion d'énergie électrique statique (10) raccordant ladite source d'énergie électrique discontinue (3) audit accumulateur d'énergie électrique (8) et apte à commander l'alimentation d'énergie électrique (3) de la source d'énergie électrique discontinue (3) vers ledit accumulateur d'énergie électrique (8), ladite seconde unité de conversion d'énergie électrique statique (10) étant à une seule voie et étant définie par un pont de conversion destiné à convertir l'énergie électrique produite par la source d'énergie électrique discontinue (3) en une énergie électrique appropriée à l'accumulateur d'énergie électrique (8), de manière à permettre l'alimentation en énergie électrique de ladite source d'énergie électrique discontinue (3) vers ledit accumulateur d'énergie électrique (8) ; et
- une unité de commande (11) destinée à commander, conformément à une logique prédéterminée, ladite première unité de conversion d'énergie électrique statique (9), ladite seconde unité de conversion d'énergie électrique statique (10), le moteur à combustion interne (6) et le noeud de commutation d'énergie (7), en fonction de divers paramètres de fonctionnement détectés, de manière à avoir la meilleure utilisation des diverses ressources disponibles et à maximiser le rendement global du système (1).

2. Système selon la revendication 1, **caractérisé en ce que** ledit noeud de commutation d'énergie (7) est raccordé au réseau de distribution électrique (2).

3. Système selon la revendication 1, **caractérisé en ce qu'**il comprend au moins une borne de crédit (24) permettant audit au moins un utilisateur d'énergie électrique (4) d'acheter davantage de crédit de consommation ; ladite au moins une borne de crédit (24) étant raccordée auxdits moyens de commande d'alimentation en énergie électrique (23).

4. Système selon la revendication 1, **caractérisé en ce que** lesdits moyens de coupure d'alimentation en énergie électrique (12) comprennent au moins un commutateur électrique commandé (12) en amont dudit utilisateur d'énergie électrique (4).

5. Système selon la revendication 4, **caractérisé en ce que** lesdits moyens de mesure de consommation de puissance électrique (13) comprennent au moins un dispositif de mesure de puissance électrique (13) en série avec ledit commutateur électrique commandé (12).

6. Système selon la revendication 1, **caractérisé en ce que** ladite unité de commande (11) comprend un réseau de communication (27) par lequel une unité de commande centrale électronique principale (22) communique avec la station de commande externe.
